# DEMANDE DE BREVET EUROPEEN

(11) **EP 0 635 311 A1**
(43) Date de publication de la demande: **25.01.1995**
(21) Numéro de dépôt: 93401888.8
(22) Date de dépôt: 21.07.1993
(51) Int. Cl.: B05B 15/12, B01D 53/04, B01J 20/34

(54) **Procédé de destruction de particules en suspension**

(71) Demandeur: O.M.I.A. Société Anonyme, F-16710 Saint-Yrieix sur Charente (FR)
(72) Inventeur: Martin, Guy, F-16600 Magnac sur Touvre (FR)
(74) Mandataire: Armengaud Ainé, Alain

(57) **Abrégé**

Procédé de destruction par pyrolyse de gaz tel que notamment de l'air contenant des solvants et composés volatiles, caractérisé en ce que l'air pollué, correspondant à l'air de dilution nécessaire à la régénération des caissons de filtres à charbon actif, subit un traitement en plusieurs étapes :
- un premier flux gazeux contenant les composés en suspension à détruire est canalisé dans une unité de préchauffage (24) ;
- il est intimement mélangé avec un deuxième flux gazeux non pollué constituant un appoint extérieur ;
- ces deux flux s'additionnent et sont recyclés dans un capteur à solvants (2) afin d'améliorer le rendement de la réaction de désorption ;
- ce flux, contenant la totalité des éléments en suspension, subit ensuite un nouveau préchauffage (25) plus important que le précédent pour que la réaction d'oxydation pyrolytique soit totale ;
- le flux gazeux, dénué de particules nocives, est refroidi avant son rejet dans l'environnement.

## Description

La présente invention concerne l'industrie en général et également la réparation automobile. Lorsqu'on emploie une cabine de peinture pour faire des projections par pulvérisation, elle s'intéresse expressément à un procédé d'élimination des solvants contenus dans l'air en circulation dans la cabine avant leurs rejets dans l'environnement.

En effet, l'air extrait d'une cabine de peinture contient en suspension deux types de produits, qui sont en fait les constituants de la peinture, de la laque, ou du vernis :
- composés solides ou pigments,
- composés volatiles ou solvants représentant 40 % en poids du produit à appliquer.

Les pouvoirs publics imposent actuellement des normes draconniennes sur les quantités d'air mis en circulation aussi bien à l'aspiration qu'au refoulement des cabines de peinture, il en est de même pour les nuisances sonores.

Il est commun de rencontrer des installations véhiculant des débits de 20 000 m³/h à 25 000 m³/h, ces débits cumulés sur plus de 20 000 installations recensées transportent globalement par an 5 000 tonnes de solvants.

On connaît des systèmes qui s'articulent autour d'un simple piège à charbon actif et d' une unique barrière compacte, ces systèmes ne restent opérant que si le volume de peinture déposé ne correspond qu'à une concentration journalière assimilable par ce simple barrage.

Dans les installations actuelles, la majeure partie des composés solides se retrouvent piégés dans des filtres secs ou humides, tandis que les composés volatiles sont stockés dans des filtres à charbon actif que l'on doit régénérer, néanmoins le procédé de stockage et de régénération n'ont pour but que de transformer les rejets hétérogènes en rejets homogènes afin d' éviter le moment des émissions des crètes de pollution pendant la phase pistolage, de stocker cette dernière à 90 % et de la renvoyer à l'atmosphère à tout moment par une concentration très faible (rejets homogènes sous les seuils d'odeur et de risques de toxicité pour le voisinage).

Cependant, il est clair que les nuisances sont quantitativement les mêmes.

La présente invention se propose donc d'améliorer les phases de stockage et de régénération en évitant tout rejet de particules volatiles, même grandement diluées dans l'environnement, par l'adjonction d'un procédé de destruction par pyrolyse des gaz avant leur rejet ; en outre, il permet une oxydation complète des solvants lors de la désorption d'une manière homogène et sans crainte de produits secondaires souvent plus dangereux que les produits primaires.

L'invention a donc pour objet un procédé de destruction par pyrolyse de gaz tel que notamment de l'air contenant des solvants et composés volatiles, caractérisé en ce que l'air pollué, correspondant à l'air de dilution nécessaire à la régénération des caissons de filtres à charbon actif, subit un traitement en plusieurs étapes :
- un premier flux gazeux contenant les composés en suspension à détruire est canalisé dans une unité de préchauffage ;
- il est intimement mélangé avec un deuxième flux gazeux non pollué constituant un appoint extérieur ;
- ces deux flux s'additionnent et sont recyclés dans un capteur à solvants afin d'améliorer le rendement de la réaction de désorption ;
- ce flux, contenant la totalité des éléments en suspension, subit ensuite un nouveau préchauffage plus important que le précédent pour que la réaction d'oxydation pyrolytique soit totale ;
- le flux gazeux, dénué de particules nocives, est refroidi avant son rejet dans l'environnement.

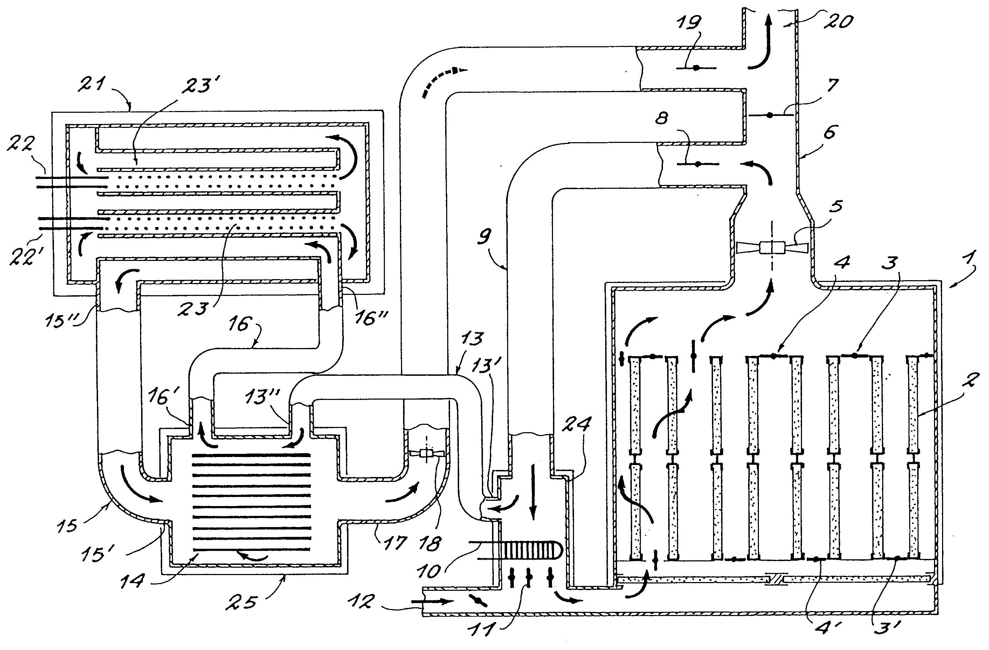

D'autres caractéristiques et avantages de la présente invention ressortiront de la description faite ci-après, en référence au dessin annexé qui en illustre un exemple de réalisation de mise en oeuvre du procédé et dépourvu de tout caractère limitatif. Sur la figure unique :
- la figure est une vue plane en coupe de l'installation de captation et de destruction des solvants lors de la régénération.

Selon un mode préféré de réalisation de ce procédé de destruction par combustion pyrolytique de particules en suspension (se reporter à la figure ), l'air est extrait d'une cabine de peinture (non représentée), il passe dans une conduite 12 et traverse un caisson 1 contenant une pluralité de filtres à charbon actif 2. Ces filtres ou capteurs à solvants conforment une série d'enceintes isolées les unes des autres à chacune de leurs extrémités par une pluralité de registres 3, 4, 3', 4'.

Le flux gazeux extrait correspond à un flux de dilution nécessaire à la régénération des caissons de filtres à charbon actif ; en effet, il est essentiel pour le haut rendement du taux d'absorption de ces charbons actifs, d'effectuer périodiquement la désorption des solvants contenus. L'air de dilution circule au travers de ces filtres durant l'arrêt de l'émission des solvants.

En modifiant l'ouverture et la fermeture desdits registres, l'opération de désorption des filtres actifs à charbon et par la suite la destruction pyrolytique, peut ainsi avoir lieu de manière cyclique sur chacune desdites enceintes présentes dans ledit caisson principal.

Un ventilateur d'extraction 5 aspire l'air au travers desdites enceintes, un volet 7 situé dans la cheminée 6 l'obture, il aiguille l'air en circulation vers un bypass 9, éventuellement isolé du caisson principal par un registre 8, relié à une unité de préchauffage 24.

Cette chambre est munie d'une source de chaleur extérieure 10, préférentiellement une résistance chauffante utilisant la puissance électrique installée sur la cabine de peinture. Cette enceinte comprend des volets 11 dans sa partie basse permettant un appoint d'air extérieur par l'intermédiaire de la conduite 12. Une circulation en circuit fermé au travers de conduites et éléments 9, 12 et 1 s'établit et conduit au réchauffage progressif de l'air en circulation, favorisant ainsi l'avènement d'une température optimale à la désorption totale des capteurs à solvants.

Une conduite 13, dite de soutirage, débouche à l'une de ses extrémités 13' sur l'enceinte de préchauffage 24 et à l'autre 13'' sur un échangeur thermique 25, préférentiellement du type croisé.

L'air contenant les particules volatiles et éventuellement les particules solides, se réchauffe à une température dite de préchauffage de l'ordre de 320° C, au contact d'un flux secondaire émanant d'une conduite 15 commune en 15' et 15'' à l'échangeur 25 et au four pyrolytique 21.

En effet, il règne au sein du four pyrolytique une température très élevée de l'ordre de 750° C synonyme d'une récupération d'énergie possible au niveau de l'enceinte 25 qui communique avec ledit four par l'intermédiaire des conduites 15 et 16. Ledit échangeur croisé 25 comporte une foultitude de dispositifs 14 par ailleurs connus, conformant des chicanes et permettant d'augmenter considérablement la surface d'échange entre les deux flux en circulation.

Le flux primaire contenant les particules à oxyder est prélevé au niveau de 16' sur l'échangeur croisé 25 par une conduite 16, ce flux circule en 16'' à l'intérieur du four pyrolytique 21, au contact des chambres pyrolytiques 23 et 23', l'oxydation totale des particules en suspension a lieu, les solvants se décomposent en éléments simples et il n'y a pas de recombinaison en produits secondaires éventuellement plus dangereux que les initiaux.

Lesdites chambres pyrolytiques comprennent au moins une épingle chauffante 22 reliée au réseau électrique présent sur la cabine de peinture, le passage du courant conduit à l'échauffement des surfaces de contact desdites chambres et l'apparition d'une température très élevée initiant la réaction pyrolytique.

En régime permanent, un ventilateur 18, placé dans une tuyauterie 17 extrait l'air contenant les éléments simples de l'enceinte de préchauffage 25 ; un volet 19 à l'intérieur de 17 met en communication le flux gazeux avec la cheminée d'extraction 20.

L'ensemble de l'installation et notamment les enceintes de préchauffage 25 et 24 ainsi que le four pyrolytique 21 sont isolées thermiquement.

Le procédé de pyrolyse réduit considérablement la taille des installations existantes B, les dimensions des colonnes d'aspiration A et de refoulement C (se reporter à la Figure unique) sont réduites, ce qui permet d'envisager avantageusement leur intégration urbaine.

Le mode opératoire est entièrement géré par un automate programmable qui commande entre autres l'ouverture ou la fermeture de tous les volets présents dans l'installation, il détermine ainsi des marches cycliques de désorption et de destruction pyrolytique autour de chacun des filtres à charbon. Il est clair que le procédé, objet de l'invention, ne peut être dissocié du procédé de captation et de régénération des solvants, il est un complément indispensable à la réalisation des objectifs fixés.

La lecture de la description qui précède montre que l'invention apporte une nouveauté dans le traitement et l'élimination des solvants issus d'une cabine de peinture ou de tout autre système de confinement qui permet à la fois de supprimer les rejets hétérogènes en rejets homogènes, la destruction de ces rejets a lieu durant la période de non utilisation de la cabine, en général la nuit pour ne pas gêner l'exploitation de cette dernière, où les coûts énergétiques et notamment électriques sont les plus faibles et aussi ces installations autorisent en cas d'absorbtion journalière importante de séquencer les rejets de régénération afin d'éviter des puissances installées trop importantes en pyrolyse et en préchauffage.

Il demeure bien entendu que la présente invention n'est pas limitée aux exemples de réalisation décrits et représentés ci-dessus, mais qu'elle en englobe toutes les variantes.

## Revendications

1. Procédé de destruction par pyrolyse de gaz tel que notamment de l'air contenant des solvants et composés volatiles, caractérisé en ce que l'air pollué, correspondant à l'air de dilution nécessaire à la régénération des caissons de filtres à charbon actif, subit un traitement en plusieurs étapes :
- un premier flux gazeux contenant les composés en suspension à détruire est canalisé dans une unité de préchauffage (24) ;
- il est intimement mélangé avec un deuxième flux gazeux non pollué constituant un appoint extérieur ;
- ces deux flux s'additionnent et sont recyclés dans un capteur à solvants (2) afin d'améliorer le rendement de la réaction de désorption ;
- ce flux, contenant la totalité des éléments en suspension, subit ensuite un nouveau préchauffage (25) plus important que le précédent pour que la réaction d'oxydation pyrolytique soit totale ;
- le flux gazeux, dénué de particules nocives, est refroidi avant son rejet dans l'environnement.

2. Procédé selon la revendication 1, caractérisé en ce que la circulation des flux primaire et secondaire gazeux est réalisée de façon qu'elle participe à une récupération d'énergie.

3. Procédé selon l'une des revendications 1 ou 2, caractérisé en ce que la circulation en circuit fermé est réalisée de manière à atteindre une température de préchauffage de l'ordre de 320° C, optimale à la désorption totale des filtres à charbon actif.

4. Installation pour la mise en oeuvre du procédé selon l'une quelconque des revendications 1 à 3, caractérisé en ce que l'air issu d'un capteur à solvants (2) et faisant office d'air de dilution pour la régénération des filtres à charbon actif est canalisé tout d'abord au travers d'un système de préchauffage (24) et ensuite intimement mélangé avec un air neuf d'appoint, pour revenir dans un capteur à solvants à une température propice à la désorption totale desdits capteurs, puis cet air chargé de solvants désorbés est envoyé vers un échangeur croisé (25) au sein duquel il se préchauffe au contact d'une circulation d'air provenant du four pyrolytique (21), ledit air préchauffé et comprenant lesdits solvants et d'éventuelles particules solides, est entièrement oxydé dans une pluralité de chambres pyrolytiques (23) puis il repasse dans ledit échangeur croisé pour son refroidissement, avant son rejet dans l'environnement.

5. Installation pour la mise en oeuvre du procédé selon l'une quelconque des revendications 1 à 3, caractérisé en ce que les sources de chaleur (10, 22, 22'), respectivement de l'enceinte de préchauffage (24) et du four pyrolytique (21) utilisent la puissance électrique existante sur l'installation.

6. Installation pour la mise en oeuvre du procédé selon l'une quelconque des revendications 1 à 3, caractérisé en ce que l'échangeur croisé (15) est muni d'un ensemble de chicanes (14) afin d'augmenter la surface d'échange thermique.

7. Installation pour la mise en oeuvre du procédé selon l'une quelconque des revendications 1 à 3, caractérisé en ce que l'on prévoit sur l'installation une isolation thermique.

8. Installation pour la mise en oeuvre du procédé selon l'une quelconque des revendications 1 à 3, caractérisé en ce que la circulation en circuit fermé au travers des conduites et éléments (9, 12, 1) permet d'atteindre une température de préchauffage de l'ordre de 320° C, optimale à la désorption totale des filtres à charbon actif.

9. Installation pour la mise en oeuvre du procédé selon l'une quelconque des revendications 1 à 3, caractérisé en ce que la circulation des flux primaire et secondaire gazeux au travers des conduites et éléments (15, 16, 25, 21) participe à une récupération d'énergie.

10. Installation pour la mise en oeuvre du procédé selon l'une quelconque des revendications 1 à 3, caractérisé en ce que l'ensemble des volets (3, 4, 3', 4', 8, 19, 7, 11), des ventilateurs (5, 18), des sources de chaleur (10, 22, 22') présents dans l'installation sont commandés par un automate pour une désorption cyclique des filtres à charbon actif (2).
